# EUROPÄISCHE PATENTSCHRIFT

(11) **EP 3 841 524 B1**
(45) Veröffentlichungstag und Bekanntmachung des Hinweises auf die Patenterteilung: **16.08.2023**
(21) Anmeldenummer: 19766189.5
(22) Anmeldetag: 23.08.2019
(51) Int. Cl.: G06K 7/12, G06V 10/143, G06V 10/22, G07D 7/00, G07D 7/12

(54) **PRÜFVERFAHREN UND PRÜFVORRICHTUNG ZUM PRÜFEN VON SICHERHEITSMARKIERUNGEN**
INSPECTION METHOD AND INSPECTION DEVICE FOR INSPECTING SECURITY MARKINGS
PROCÉDÉ DE CONTRÔLE ET DISPOSITIF DE CONTRÔLE DESTINÉS AU CONTRÔLE DE MARQUAGES DE SÉCURITÉ

(30) Priorität: 24.08.2018 DE 102018120775
(43) Veröffentlichungstag der Anmeldung: 30.06.2021
(73) Patentinhaber: DPG Deutsche Pfandsystem GmbH, 10117 Berlin (DE)
(72) Erfinder: JANSEN, Robert, 14476 Potsdam (DE)
(74) Vertreter: Eisenführ Speiser
(86) Internationale Anmeldenummer: PCT/EP2019/072638
(87) Internationale Veröffentlichungsnummer: WO 2020/039091

(56) Entgegenhaltungen:
- EP-A1- 1 953 674
- EP-A2- 1 821 096
- EP-B1- 1 821 096
- DE-A1-102016 011 766

## Beschreibung

Die Anmeldung betrifft eine Ausleseeinheit und ein Prüfverfahren zum Auslesen und Prüfen von Sicherheitsmarkierungen, insbesondere Sicherheitsmarkierungen auf Verpackungen, wie sie beispielsweise im Rahmen eines Pfandsystems genutzt werden.

Sicherheitsmarkierungen werden in vielfältiger Weise genutzt um Fälschungen zu erschweren und eine möglichst gute Gewähr für die Authentizität einer Urkunde, eines Produkts, einer Banknote oder dergleichen zu bieten. Bei pfandbehafteten Produkten werden Sicherheitsmarkierungen genutzt, weil der Pfandwert typischerweise höher ist, als der Wert der Verpackung selbst.

Es ist bekannt, auf eine äußere Hülle der Verpackung oder ein Etikett oder eine Banderole der Verpackung, die beispielsweise aus Kunststoff, Blech oder Pappe bestehen kann, eine Sicherheitsmarkierung aufzubringen, welche mehrere nebeneinander angeordnete Felder aufweist, die unterschiedliche Reflexionseigenschaften aufweisen. Eines dieser Felder ist beispielsweise ein Kontrastfeld mit einer vergleichsweise hohen Reflektivität in einem breiten Wellenlängenbereich, der z.B. sichtbares und infrarotes Licht umfasst. Ein zweites dieser Felder ist ein Dunkelfeld, das eine im Vergleich zum Kontrastfeld geringe Reflektivität in dem breiten Wellenlängenbereich besitzt. Ein drittes Feld ist ein Sicherheitsfeld, das in wenigstens einem bekannten Wellenlängenbereich andere Reflexionseigenschaften aufweist, als in einem anderen bekannten Wellenlängenbereich. Beispielsweise kann das Sicherheitsfeld in einem ersten z.B. sichtbaren Wellenlängenbereich des Lichtes eine geringe Reflektivität besitzen. In einem zweiten anderen, sichtbaren oder unsichtbaren Wellenlängenbereich des Lichtes besitzt das Sicherheitsfeld hingegen eine höhere Reflektivität - oder umgekehrt.

Die Reflektivität des jeweiligen Feldes für eine jeweilige Wellenlänge hängt von der Farbe ab, mit der das jeweilige Feld auf einen jeweiligen Untergrund aufgebracht, insbesondere aufgedruckt ist. Typischerweise ist die Farbe, mit der das Kontrastfeld gedruckt ist oder die Kontrastfelder gedruckt sind, eine breitbandig reflektierende Farbe, während die Farbe, mit der das Dunkelfeld gedruckt ist oder die Dunkelfelder gedruckt sind, eine breitbandig absorbierende Farbe ist. Das Kontrastfeld kann auch von dem Untergrund selbst gebildet sein, wenn dieser selbst breitbandig reflektierend ist. Ist dies der Fall, ist das Kontrastfeld nicht gedruckt, sondern wird von dem ungedruckten Untergrund gebildet.

In vielen Fällen ist neben einer Sicherheitsmarkierung auch eine Identifikationskennzeichnung vorgesehen, die die Produktart, den Hersteller oder die Banknote etc. kennzeichnet, z.B. Hersteller, Produkt oder Wert der Banknote angibt. Die Identifikationskennzeichnung kann zum Beispiel eine in Form eines Barcodes oder eines QR-Codes dargestellte GTIN sein. GTIN ist die Abkürzung für Global Trade Item Number, also eine globale Artikelnummer.

Neben typischerweise mit schwarzer oder in einem breiten Wellenlängenbereich dunkler Farbe gedruckten Zeichenbestanteilen der Identifikationskennzeichnung ist der Hintergrund - also die Umgebung der mit dunkler Farbe gedruckten Zeichenbestandteile der Identifikationskennzeichnung - hell und insbesondere weiß, damit sich ein guter Kontrast ergibt. Typischerweise wird der helle, insbesondere weiße Hintergrund der Zeichenbestandteile der Identifikationskennzeichnung von dem unbedruckten Untergrund gebildet, auf den auch die dunklen Zeichenbestandteile der Identifikationskennzeichnung gedruckt sind. Dies ist regelmäßig auch der gleiche Untergrund, der auch das helle Kontrastfeld der Sicherheitsmarkierung bildet. Das Kontrastfeld (oder die Kontrastfelder) der Sicherheitsmarkierung und der Hintergrund um die mit dunkler Farbe gedruckten Zeichenbestandteile der Identifikationskennzeichnung haben daher regelmäßig dieselbe helle, z.B. weiße Farbe.

Die mit dunkler Farbe gedruckten Zeichenbestandteile der Identifikationskennzeichnung und die Dunkelfelder der Sicherheitsmarkierung sind üblicherweise mit der selben breitbandig dunklen Farbe, z.B. Rußschwarz, auf hellen Untergrund gedruckt.

Die Farbe, mit der das Sicherheitsfeld auf den hellen Untergrund gedruckt ist oder die Sicherheitsfelder auf den hellen Untergrund gedruckt sind, hat in dem ersten Wellenlängenbereich eine höhere Absorption als in dem zweiten Wellenlängenbereich. Dementsprechend besitzt die Farbe, mit der das Sicherheitsfeld gedruckt ist oder die Sicherheitsfelder gedruckt sind, in dem zweiten Wellenlängenbereich eine höhere Reflektivität oder eine höhere Transparenz oder beides. Hat die Farbe, mit der das Sicherheitsfeld gedruckt ist oder die Sicherheitsfelder gedruckt sind, im zweiten Wellenlängenbereich eine höhere Reflektivität, als in dem ersten Wellenlängenbereich, ist die Intensität des reflektierten Lichts in dem zweiten Wellenlängenbereich in jedem Fall größer, als die Intensität des reflektierten Lichts in dem ersten Wellenlängenbereich. Hat die Farbe, mit der das Sicherheitsfeld gedruckt ist oder die Sicherheitsfelder gedruckt sind, im zweiten Wellenlängenbereich eine höhere Transparenz, als in dem ersten Wellenlängenbereich, ist die Intensität des reflektierten Lichts in dem zweiten Wellenlängenbereich dann größer, als die Intensität des reflektierten Lichts in dem ersten Wellenlängenbereich, wenn der Untergrund unter der Farbe, mit der das Sicherheitsfeld gedruckt ist, eine ausreichend hohe Reflektivität in diesem zweiten Wellenlängenbereich besitzt. Wenn die Farbe, mit der das Sicherheitsfeld gedruckt ist oder die Sicherheitsfelder gedruckt sind, in dem zweiten Wellenlängenbereich bereits selbst eine hohe Reflektivität besitzt, kommt es auf die Reflektivität des Untergrundes unter der Farbe, mit der das Sicherheitsfeld gedruckt ist oder die Sicherheitsfelder gedruckt sind, weniger oder gar nicht an.

Eine Möglichkeit, eine Sicherheitsmarkierung der beschriebenen Art zu prüfen, besteht darin, die Sicherheitsmarkierung zum einen mit Licht im ersten Wellenlängenbereich zu beleuchten und zum anderen mit Licht im zweiten Wellenlängenbereich.

In DE 10 2006 011 143, DE 102 47 252 und DE 43 19 555 ist jeweils ein Sicherheitsfeld beschrieben, das mit einer Farbe gedruckt ist, die sichtbares Licht stark absorbiert und für infrarotes Licht transparent ist, so dass die Reflektivität des Sicherheitsfeldes im infraroten Wellenlängenbereich von dem Untergrund unter der Farbe, mit der das Sicherheitsfeld gedruckt ist, bestimmt ist. Der Untergrund des Sicherheitsfelds ist weiß, so dass das Sicherheitsfeld unter Infrarotlicht ebenfalls genauso weiß wie der Untergrund und die Umgebung des Sicherheitsfeldes erscheint, denn die Farbe, mit der das Sicherheitsfeld gedruckt ist, ist ja für Infrarotlicht transparent und somit unsichtbar, so dass unter Infrarotlicht der Untergrund unter der Farbe, mit der das Sicherheitsfeld gedruckt ist, sichtbar ist. DE 10 2016 011766 A1 offenbart ein Verfahren zum Überprüfen von zumindest einem mittels einer Sicherheitsfarbe erzeugtem farblichen Sicherheitsmerkmal einer Sicherheitsmarkierung auf einer Pfandverpackung, sowie eine Vorrichtung und einen Rücknahmeautomaten.

Ein anderes Prüfverfahren stellt darauf ab, das Maß zu bestimmen, um das das Sicherheitsfeld in dem zweiten Wellenlängenbereich stärker reflektiert, als in dem ersten Wellenlängenbereich. Dieses Verfahren hat den Vorteil, dass die Prüfung des Sicherheitsfelds nicht auf die Umgebung des Sicherheitsfeldes oder irgendein Referenzfeld referenzieren muss, das die selbe Farbe hat, wie der Untergrund auf den die Farbe für das Sicherheitsfeld gedruckt ist.

Das andere Prüfverfahren hat dafür den Nachteil, dass die Intensität des von dem Sicherheitsfeld reflektierten Lichts von der Intensität der Beleuchtung - im folgenden auch Beleuchtungsstärke genannt - abhängt. Die Beleuchtungsstärke hängt wiederum nicht nur von einer Intensität einer Lichtquelle, sondern z.B. auch von dem Abstand ab, den das zu prüfende Sicherheitsfeld von der Lichtquelle hat, oder von dem Winkel, in dem das Licht der Lichtquelle auf das Sicherheitsfeld auftrifft.

Die Sicherheitsmarkierung befindet sich typischerweise auf wertbehafteten Artikel, z.B. mit einem Pfandwert behafteten Getränkeverpackungen. Wird der wertbehaftete Artikel übergeben, also z.B. eine pfand behaftete Getränkeverpackung zurückgegeben, wird der Wert (also z.B. der Pfand) ausgezahlt und die auszahlende Stelle berechnet den ausgezahlten Wert weiter - an wen, ergibt sich beispielsweise aus der Identifikationskennzeichnung. Nun ist es möglich, die ursprüngliche Identifikationskennzeichnung durch eine andere Identifikationskennzeichnung zu ersetzen, so dass der ausgezahlte Wert im Ergebnis einer anderen als der eigentlich verpflichteten Stelle in Rechnung gestellt wird.

Der Erfindung liegt die Aufgabe zugrunde, ein verbessertes Prüfverfahren und Mittel für ein verbessertes Prüfverfahren bereit zu stellen.

Erfindungsgemäß wird diese Aufgabe durch ein Prüfverfahren gelöst, das so konfiguriert ist, dass es eine Kombination aus Sicherheitsmarkierung und Identifikationskennzeichnung darauf überprüft, ob sich beide auf einem einheitlichen Untergrund, also z.B. dem selben Substrat befinden.

Erfindungsgemäß erfolgt dies dadurch, dass geprüft wird, ob der Hintergrund der Identifikationskennzeichnung und das Kontrastfeld der Sicherheitsmarkierung bei wenigstens einer Wellenlänge den selben Grauwert haben - also bei gleicher Beleuchtung gleich hell sind. Hierzu wird von der Kombination aus Identifikationskennzeichnung und Sicherheitsmarkierung mittels einer entsprechenden Kamera eine Graustufenbild aufgenommen. Durch die Kamera werden die unterschiedlichen Helligkeiten der Zeichenbestandteile von Identifikationskennzeichnung und Sicherheitsmarkierung in Zahlenwerte gewandelt, die beispielsweise bei einer Digitalkamera mit einem Bildsensor, der einen Dynamikumfang von 8 Bit hat, zwischen 0 und 255 betragen können, wobei meist nur ein Teil des maximal zur Verfügung stehenden Dynamikumfangs ausgenutzt wird.

Da eine gleiche und insbesondere eine gleichmäßige Beleuchtung nicht immer gegeben sind, wird vorzugsweise eine Grauwertkorrektur mittels entsprechender lokaler Punktoperationen bei der Bildvorverarbeitung vorgenommen.

Insbesondere wird ein Prüfverfahren zum Überprüfen der Integrität einer Kombination aus einer Sicherheitsmarkierung und einer Identifikationskennzeichnung, von denen die Sicherheitsmarkierung wenigstens ein Kontrastfeld mit einer vergleichsweise hohen Reflektivität in einem ersten und einem zweiten Wellenlängenbereich und ein Sicherheitsfeld, das in dem ersten Wellenlängenbereich andere Reflexionseigenschaften aufweist, als in dem zweiten Wellenlängenbereich aufweist, und von denen die Identifikationskennzeichnung wenigsten einen hellen Hintergrund und mit dunkler Farbe gedruckte Zeichenbestanteile aufweist, vorgeschlagen, das die folgenden Schritte umfasst:
- Beleuchten der Kombination aus Sicherheitsmarkierung und Identifikationskennzeichnung mit Licht in einem vorgegebenen Wellenlängenbereich,
- Aufnahmen eines Abbildes der Kombination aus Sicherheitsmarkierung und Identifikationskennzeichnung,
- Identifizieren der Sicherheitsmarkierung und der Identifikationskennzeichnung in dem Abbild,
- Erfassen eines gegebenenfalls gemittelten Grauwerts des Kontrastfeldes der Sicherheitsmarkierung,
- Erfassen eines gegebenenfalls gemittelten Grauwerts des Hintergrunds der Identifikationskennzeichnung,
- Vergleichen des Grauwerts des Kontrastfeldes der Sicherheitsmarkierung mit dem Grauwert des Hintergrunds der Identifikationskennzeichnung,
- Bestimmen, ob der Grauwert des Kontrastfeldes der Sicherheitsmarkierung um weniger als ein vorgegebenes Höchstmaß von dem Grauwert des Hintergrunds der Identifikationskennzeichnung abweicht, und
- Generieren und Ausgeben eines eine mangelnde Integrität kennzeichnenden Signals, falls der Grauwert des Kontrastfeldes der Sicherheitsmarkierung um mehr als ein vorgegebenes Höchstmaß von dem Grauwert des Hintergrunds der Identifikationskennzeichnung abweicht.

Vorzugsweise werden Grauwerte des Kontrastfeldes der Sicherheitsmarkierung und Grauwerte des Hintergrunds der Identifikationskennzeichnung jeweils in verschiedene Messfeldern bestimmt und gemittelt.

Vorzugsweise wird für jedes der Messfelder ein Grauwerthistogramm gebildet.

Vorzugsweise werden die Grauwerthistogramme geglättet.

Vorzugsweise wird eine geprüfte Kombination aus Sicherheitsmarkierung und Identifikationskennzeichnung als unzulässig abgewiesen, wenn der Grauwert des Kontrastfeldes der Sicherheitsmarkierung um mehr als 10% von dem Grauwert des Hintergrunds der Identifikationskennzeichnung abweicht.

Das Prüfverfahren wird vorzugsweise von einer Ausleseeinheit durchgeführt, die dazu ausgebildet ist, das Prüfverfahren auszuführen.

Gemäß weiterer Varianten des Prüfverfahrens erfolgt zusätzlich eine Prüfung der Sicherheitsmarkierung und insbesondere eine Prüfung des Sicherheitsfeldes nicht nur in zwei unterschiedlichen Wellenlängenbereichen, sondern in mehreren unterschiedlichen Wellenlängenbereichen, so dass die spektralen Eigenschaften der Felder der Sicherheitsmarkierung - und zwar insbesondre die spektralen Eigenschaften des Sicherheitsfeldes und der Farbe oder der Farben mit denen dieses gedruckt ist - noch differenzierter geprüft werden können und eine Fälschung noch stärker erschwert wird.

Der Erfindungsgedanke wird außerdem durch eine Ausleseeinheit für eine Sicherheitsmarkierung auf einer Verpackung der vorstehend beschriebenen Art verkörpert. Die Ausleseeinheit ist erfindungsgemäß ausgebildet, eine Intensität des von dem Sicherheitsfeld der Sicherheitsmarkierung reflektierten Lichtes in wenigstens zwei unterschiedlichen Wellenlängenbereichen zu erfassen, von denen ein erster Wellenlängenbereich ein Wellenlängenbereich ist, bei dem das Sicherheitsfeld stark absorbiert, während der andere, zweite Wellenlängenbereich ein Wellenlängenbereich ist, bei dem das Sicherheitsfeld vergleichsweise stärker reflektiert.

Die Ausleseeinheit besitzt vorzugsweise eine Bilderfassungseinheit mit einem Flächensensor mit lichtempfindlichen Sensorelementen, die vorzugsweise matrixartig angeordnet sind. Die Bilderfassungseinheit mit Flächensensor dient dem Erfassen eines auf den Sensor abgebildeten Bildes in zwei Dimensionen.

Vor dem Flächensensor ist hierzu üblicherweise eine Optik angebracht, die das Bild einer jeweiligen Sicherheitsmarkierung möglichst scharf auf dem Flächensensor abbildet.

Die lichtempfindlichen Sensorelemente sind sowohl in dem ersten Wellenlängenbereich des Lichtes als auch in dem zweiten Wellenlängenbereich lichtempfindlich und somit in der Lage, sowohl Bilder der Sicherheitsmarkierung und insbesondere des Sicherheitsfeldes bei Beleuchtung mit Licht in dem ersten Wellenlängenbereich, als auch bei Beleuchtung mit Licht in dem zweiten Wellenlängenbereich aufzunehmen. Ob das Bild der Sicherheitsmarkierung bei Licht in dem ersten Wellenlängenbereich oder bei Licht in dem zweiten Wellenlängenbereich aufgenommen wird, hängt bei dieser Ausführungsvariante somit davon ab, mit welchem Licht die Verpackung mit der Sicherheitsmarkierung beleuchtet wird.

Entsprechend weist die Ausleseeinheit in einer bevorzugten Ausführungsvariante ein Beleuchtungsmodul auf, das ausgebildet und angeordnet ist, einen Sichtbereich der Bilderfassungseinheit gleichzeitig oder abwechselnd mit Licht in dem ersten Wellenlängenbereich und mit Licht in dem zweiten Wellenlängenbereich zu beleuchten. Mit Sichtbereich der Bilderfassungseinheit ist hierbei der Raum gemeint, in dem sich die Sicherheitsmarkierung einer Verpackung befindet, wenn sein Bild scharf auf dem Flächensensor abgebildet wird.

Alternativ kann auch ein Beleuchtungsmodul vorgesehen sein, das den Sichtbereich der Bilderfassungseinheit gleichzeitig mit Licht in dem ersten Wellenlängenbereich und mit Licht in dem zweiten Wellenlängenbereich - also z.B. breitbandig - ausleuchtet. In diesem Fall können vor die Bilderfassungseinheit abwechselnd Lichtfilter geschaltet werden, von denen einer für Licht in dem ersten Wellenlängenbereich und ein anderer für Licht in dem zweiten Wellenlängenbereich transparent ist und den jeweils anderen Wellenlängenbereich sperrt. Es können auch zwei Beleuchtungsmodule vorgesehen sein, eines für Licht in dem ersten Wellenlängenbereich und eines für Licht in dem zweiten Wellenlängenbereich, die abwechselnd eingeschalten werden. Genauso können zwei Bilderfassungseinheiten vorgesehen sein, die aufgrund der Eigenschaften ihres Flächensensors oder aufgrund entsprechender Filter einerseits nur Bilder bei Licht in dem ersten Wellenlängenbereich und andererseits nur Bilder bei Licht in dem zweiten Wellenlängenbereich erfassen.

Schließlich ist es auch möglich, ein Beleuchtungsmodul vorzusehen, das gleichzeitig sowohl Licht in dem ersten Wellenlängenbereich als auch Licht in dem zweiten Wellenlängenbereich aussendet und eine Bilderfassungseinheit, die sowohl für Licht in dem ersten Wellenlängenbereich als auch für Licht in dem zweiten Wellenlängenbereich empfindlich ist, ohne dass weitere Filter benötigt werden. Das bei dieser Variante letztendlich erfasste Bild der Sicherheitsmarkierung wäre im Bereich der Dunkelfelder dunkel, da die Dunkelfelder sowohl Licht in dem ersten Wellenlängenbereich als auch Licht in dem zweiten Wellenlängenbereich absorbieren. Das Kontrastfeld wäre hell, da das Kontrastfeld sowohl für Licht in dem ersten Wellenlängenbereich als auch für Licht in dem zweiten Wellenlängenbereich eine hohe Reflektivität besitzt. Das Sicherheitsfeld hätte hingegen einen mittleren Grauwert, da das Sicherheitsfeld zwar Licht in dem ersten Wellenlängenbereich absorbiert, für Licht in dem zweiten Wellenlängenbereich aber eine relativ hohe Reflektivität besitzt, die in jedem Falle höher ist, als die Reflektivität der Dunkelfelder bei Licht in dem zweiten Wellenlängenbereich. Selbst wenn das Sicherheitsfeld bei Licht in dem zweiten Wellenlängenbereich die gleiche hohe Reflektivität besäße, wie das Kontrastfeld, wird es bei der letztgenannten Ausführungsvariante, bei der die Sicherheitsmarkierung sowohl mit Licht in dem ersten Wellenlängenbereich als auch mit Licht in dem zweiten Wellenlängenbereich beleuchtet und das reflektierte Licht breitbandig erfasst wird, dazu kommen, dass das Sicherheitsfeld nicht ganz hell, sondern grau erscheint, da es ja in jedem Falle Licht in dem ersten Wellenlängenbereich absorbiert.

In den nicht breitbandig ausgelegten Varianten besitzt das Beleuchtungsmodul vorzugsweise Lichtquellen, die schmalbandig sind, so dass die spektrale Bandbreite (von Halbwert des Maximums zu Halbwert des Maximums (FWHM: full with at half maximum)) jeweils kleiner als 60 nm ist. Die mittlere Wellenlänge zwischen diesen beiden Halbwertswellenlängen wird im Rahmen dieser Beschreibung als zentrale Wellenlänge des jeweiligen Wellenlängenbereichs bezeichnet.

Das Beleuchtungsmodul ist vorzugsweise so ausgebildet, dass es Licht im sichtbaren Wellenlängenbereich in wenigstens zwei Teilwellenlängenbereichen ausstrahlt, deren zentrale Wellenlängen vorzugsweise mehr als 200 nm auseinanderliegen.

Die Intensität des kurzwelligeren dieser beiden Wellenlängenbereiche beträgt vorzugsweise zwischen 25 und 40 % der Gesamtintensität des in den beiden Teilwellenlängenbereichen ausgestrahlten sichtbaren Lichtes. Besonders geeignete Lichtquellen sind Leuchtdioden. Diese haben kurze Reaktionszeiten und schmale Bandbreiten.

Das Beleuchtungsmodul ist vorzugsweise so ausgebildet, dass der Sichtbereich der Bilderfassungseinheit, in dem sich eine bewertende Verpackung befindet, derart gleichmäßig ausgeleuchtet wird, dass die Intensitätsdifferenz über den Sichtbereich höchstens 25 % beträgt.

Weiterhin ist das Beleuchtungsmodul vorzugsweise so angeordnet, dass der auf eine Flächennormale der zu beleuchtenden Sicherheitsmarkierung bezogene Beleuchtungswinkel zwischen 20° und 45° beträgt.

Die Bilderfassungseinheit mit zugehöriger Optik zum Abbilden einer zu bewertenden Sicherheitsmarkierung auf dem Flächensensor ist vorzugsweise so gestaltet, dass 1 mm² der Sicherheitsmarkierung von wenigstens vier ganzen Sensorelementen (Pixeln) erfasst wird.

Die Ausleseeinheit umfasst vorzugsweise eine Auswerteeinheit, die mit der Bilderfassungseinheit verbunden ist und die ausgebildet ist, mittlere Grauwerte für wenigstens ein Kontrastfeld, wenigstens ein Dunkelfeld und das Sicherheitsfeld zu erfassen, und zwar vorzugsweise separat für Licht in dem ersten Wellenlängenbereich und für Licht in dem zweiten Wellenlängenbereich. Eine mit der Auswerteeinheit verbundene Bewertungseinheit ist schließlich ausgebildet, eine Bewertung der jeweils erfassten Sicherheitsmarkierung auf Basis der für die beiden verschiedenen Wellenlängenbereiche erfassten Grauwerte des Sicherheitsfeldes durchzuführen. Wenn die Bewertung der Grauwerte durch die Bewertungseinheit ergibt, dass insbesondere die Grauwerte im Bereich des Abbildes des Sicherheitsfeldes bei Beleuchtung mit Licht in dem zweiten Wellenlängenbereich um ein vorgegebenes Maß von den Grauwerten bei Beleuchtung mit Licht in dem ersten Wellenlängenbereich abweichen, erfolgt die Bewertung der Sicherheitsmarkierung als in Ordnung. Anderenfalls erfolgt eine Bewertung als nicht in Ordnung. Letzteres hätte bei der vorgesehenen Verwendung in einem Pfandautomaten die Wirkung, dass eine Verpackung nicht angenommen, sondern zurückgenommen wird. Eine Erstattung des Pfandwertes erfolgt dann nicht. Wird hingegen eine jeweils erfasste Sicherheitsmarkierung als in Ordnung bewertet, wird die entsprechende Verpackung von einem Rücknahmeautomaten mit der erfindungsgemäßen Ausleseeinheit angenommen und der Pfandwert erstattet.

Die Erfindung soll nun anhand eines Ausführungsbeispiels mit Bezug auf die Figuren näher erläutert werden:
- Figur 1:: zeigt beispielhaft eine Verpackung mit einer Sicherheitsmarkierung gemäß der Erfindung;
- Figur 2:: zeigt ein Ausführungsbeispiel einer einfachsten Variante einer Sicherheitsmarkierung für eine erfindungsgemäße Verpackung;
- Figur 3:: zeigt eine erweiterte Ausführungsvariante der Sicherheitsmarkierung aus Figur 2;
- Figur 4:: zeigt die Sicherheitsmarkierung aus Figur 3 in seiner Form für einen anderen Untergrund;
- Figur 5:: zeigt eine alternative Ausführungsvariante einer Sicherheitsmarkierung;
- Figur 6:: zeigt eine schematische Darstellung einer erfindungsgemäßen Ausleseeinheit.

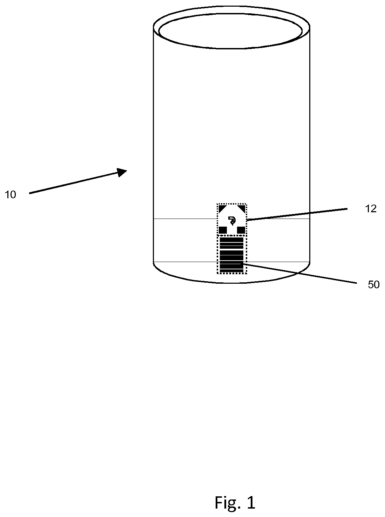

Figur 1 zeigt beispielhaft eine Verpackung 10 in Form einer Dose mit einer Sicherheitsmarkierung 12 und einer Identifikationskennzeichnung 50, die im abgebildeten Beispiel in Form eines Barcodes vorliegt.

Die Sicherheitsmarkierung 12 dient dazu, die Verpackung 10 als eine Verpackung zu kennzeichnen, für die beim Erwerb durch einen Verbraucher Pfand zu zahlen ist, den der Verbraucher bei Rückgabe der Verpackung zurückerhält. Die Sicherheitsmarkierung ist so gestaltet, dass es nicht ohne weiteres möglich ist, solche Verpackungen, für die kein Pfand bezahlt wurde, mit der Sicherheitsmarkierung auszustatten. Da der Pfandwert größer ist als der Verpackungswert, würde demjenigen, der die Verpackung zurücknimmt und den Pfand auszahlt, im Falle von Verpackungen mit gefälschter Sicherheitsmarkierung ein Schaden entstehen.

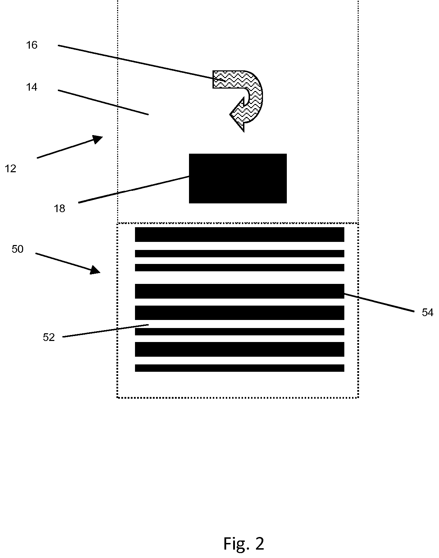

Figur 2 zeigt die wesentlichen Merkmale der Sicherheitsmarkierung 12, nämlich ein vergleichsweise stark reflektierendes Kontrastfeld 14, das ein Sicherheitsfeld 16 und ein Signalfeld 18 umschließt. Das Kontrastfeld 14 ist in einem breiten Wellenlängenbereich stark reflektierend, insbesondere im sichtbaren Wellenlängenbereich des Lichtes sowie im Übergang zum infrarotem Wellenlängenbereich.

Das Sicherheitsfeld 16 hat die Eigenschaft, dass es in einem ersten, vorzugsweise sichtbaren Wellenlängenbereich des Lichtes, schwach reflektierend ist, also stark absorbierend und daher dunkel erscheint.

In einem zweiten, vorzugsweise ebenfalls sichtbaren Wellenlängenbereich des Lichts, ist das Sicherheitsfeld 16 hingegen stark reflektierend, beispielsweise genauso stark reflektierend wie das Kontrastfeld 14. Diese Eigenschaft unterschiedlicher Reflektivität bei verschiedenen Wellenlängen erhält das Sicherheitsfeld 16 dadurch, dass die Farbe, mit der das Sicherheitsfeld 16 gedruckt ist, in dem zweiten Wellenlängenbereich eine geringere Absorption aufweist, als in dem ersten Wellenlängenbereich.

Dies hat zur Folge, dass bei Betrachtung der Verpackung 10 in dem ersten Wellenlängenbereich, z.B. bei normalem Tageslicht das Sicherheitsfeld 16 deutlich als dunkles Feld vor hellem Hintergrund zu erkennen ist, während sich das Sicherheitsfeld 16 bei Betrachtung in dem zweiten Wellenlängenbereich, beispielsweise mit Hilfe einer entsprechenden Kamera schwächer zu erkennen ist, da das Sicherheitsfeld 16 in dem zweiten Wellenlängenbereich eine höhere Reflektivität besitzt, die der des Kontrastfelds 14 ähnlich sein.

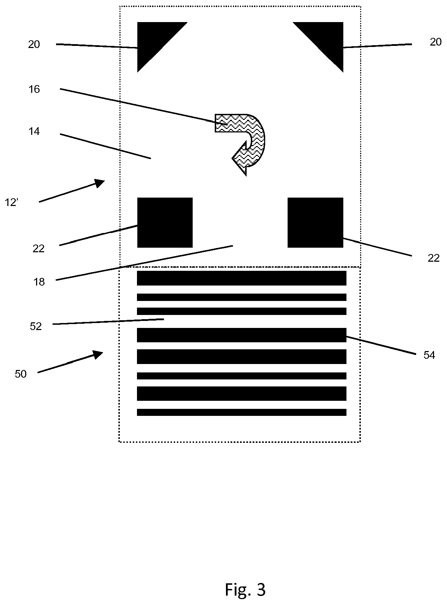

Die Reflektivität des jeweiligen Feldes für eine jeweilige Wellenlänge - und damit die Intensität mit der Licht in einem jeweiligen Wellenlängenbereich reflektiert wird - hängt von der Farbe ab, mit der das jeweilige Feld auf einen jeweiligen Untergrund gedruckt ist, und von dem Untergrund selbst. Typischerweise ist die Farbe, mit der das Kontrastfeld 14 gedruckt ist oder die Kontrastfelder gedruckt sind, eine breitbandig reflektierende Farbe, während die Farbe, mit ggf. vorgesehene Dunkelfelder 20 und 22 gedruckt sind (siehe Figur 3), eine breitbandig absorbierende Farbe ist. Das Kontrastfeld 14 kann auch von dem Untergrund selbst gebildet sein, wenn dieser selbst breitbandig reflektierend ist, so dass das Kontrastfeld 14 nicht notwendigerweise bedruckt sein muss.

Die Identifikationskennzeichnung 50 ist von mit schwarzer oder in einem breiten Wellenlängenbereich dunkler Farbe gedruckten Zeichenbestanteilen 52 in Form von Balken gebildet, die von einem hellen, beispielsweise weißen Hintergrund 54 umgeben sind. Der Hintergrund 54 befindet sich auch zwischen den mit dunkler Farbe gedruckten Zeichenbestanteilen 52 in Form der Balken. Typischerweise wird der helle, insbesondere weiße Hintergrund der Zeichenbestandteile der Identifikationskennzeichnung 50 von dem Untergrund gebildet, aus den auch die dunklen Zeichenbestandteile 52 der Identifikationskennzeichnung gedruckt sind. Dies ist der gleiche Untergrund, der auch das helle Kontrastfeld 14 der Sicherheitsmarkierung 12 bildet. Das Kontrastfeld (oder die Kontrastfelder) 14 der Sicherheitsmarkierung 12 und der Hintergrund 52 um die mit dunkler Farbe gedruckten Zeichenbestandteile 52 der Identifikationskennzeichnung 50 haben daher dieselbe helle, z.B. weiße Farbe.

Falls die Kombination aus Sicherheitsmarkierung 12 und Identifikationskennzeichnung 50 unzulässig manipuliert wurde, indem z.B. die ursprüngliche Identifikationskennzeichnung 52 (der Barcode) überklebt wurde können das Kontrastfeld 14 und der Hintergrund 52 auch leicht voneinander abweichende Helligkeiten aufweisen. Dieser Unterschied kann erfindungsgemäß dazu genutzt werden, Fälschungen oder unzulässige Manipulationen zu erkennen.

Die mit dunkler Farbe gedruckten Zeichenbestandteile 52 der Identifikationskennzeichnung 50 und die Dunkelfelder 20 und 22 der Sicherheitsmarkierung 12 sind üblicherweise mit der selben breitbandig dunklen Farbe, z.B. Rußschwarz, auf hellen Untergrund gedruckt.

Die Farbe, mit der das Sicherheitsfeld 16 gedruckt ist, hat in dem ersten Wellenlängenbereich eine höhere Absorption als in dem zweiten Wellenlängenbereich. Dementsprechend besitzt die Farbe, mit der das Sicherheitsfeld 16 gedruckt ist, in dem zweiten Wellenlängenbereich eine höhere Reflektivität oder eine höhere Transparenz oder beides, als in dem ersten Wellenlängenbereich. Hat die Farbe, mit der das Sicherheitsfeld 16 gedruckt ist, im zweiten Wellenlängenbereich eine höhere Reflektivität, als in dem ersten Wellenlängenbereich, ist die Intensität des reflektierten Lichts in dem zweiten Wellenlängenbereich in jedem Fall größer, als die Intensität des reflektierten Lichts in dem ersten Wellenlängenbereich. Hat die Farbe, mit der das Sicherheitsfeld 16 gedruckt ist, im zweiten Wellenlängenbereich eine höhere Transparenz, als in dem ersten Wellenlängenbereich, ist die Intensität des reflektierten Lichts in dem zweiten Wellenlängenbereich dann größer, als die Intensität des reflektierten Lichts in dem ersten Wellenlängenbereich, wenn der Untergrund unter der Farbe, mit der das Sicherheitsfeld 16 gedruckt ist, eine ausreichend hohe Reflektivität in diesem zweiten Wellenlängenbereich besitzt. Wenn die Farbe, mit der das Sicherheitsfeld 16 gedruckt ist, in dem zweiten Wellenlängenbereich bereits selbst eine hohe Reflektivität besitzt, kommt es auf die Reflektivität des Untergrundes unter der Farbe, mit der das Sicherheitsfeld 16 gedruckt ist, weniger oder gar nicht an.

Aus Sicherheitsgründen ist es jedoch vorteilhaft, wenn der Untergrund unter der Farbe, mit der das Sicherheitsfeld 16 gedruckt ist, eine Reflektivität besitzt, die von der Reflektivität des Kontrastfeldes 14 abweicht. Die bedeutet, dass das Sicherheitsfeld 16 mit zwei Farben gedruckt sein kann, nämlich zunächst mit einer ersten Farbe mit Reflektionseigenschaften, die von denen des Kontrastfeldes 14 abweichen, und anschließend mit einer zweiten Farbe, so dass die zweite Farbe die erste Farbe bedeckt. Die zweite Farbe, mit der das Sicherheitsfeld 16 gedruckt ist, ist dann diejenige Farbe, die wie zuvor beschrieben im zweiten Wellenlängenbereich eine höhere Reflektivität und/oder Transparenz besitzt, als in dem ersten Wellenlängenbereich.

Das Sicherheitsfeld 16 hat eine asymmetrische Form, so dass dessen Ausrichtung in Bezug auf die übrige Sicherheitsmarkierung eindeutig zu erkennen ist.

Weiterer Bestandteil der Sicherheitsmarkierung 12 ist ein Signalfeld 18, das je nach Art der Verpackung in einem breiten Wellenlängenbereich, der sichtbares wie infrarotes Licht einschließt, entweder stark absorbierend (wie in Figur 2 dargestellt) oder stark reflektierend ist. Im letztgenannten Fall - stark reflektierendes Signalfeld 18 - besitzt das Signalfeld 18 die gleiche Farbe wie der Hintergrund 14 und ist somit praktisch nicht vorhanden, sondern ausschließlich durch die abstrakte Definition seines vorgesehenen Ortes bestimmt. In dem Ausführungsbeispiel gemäß Figur 2 ist das Signalfeld 18 in stark absorbierender Farbe dargestellt, also schwach reflektierend und daher dunkel.

Das Signalfeld 18 dient dazu, einer Vorrichtung zum Auslesen der Sicherheitsmarkierung zu signalisieren, ob und ggf. welche gespeicherten Parameter bei einer Prüfung der Sicherheitsmarkierung zu berücksichtigen sind. Parameter können z.B. gespeicherte Korrekturfaktoren sein.

Um das Auffinden der Sicherheitsmarkierung 12' (siehe Figur 3) auf einer Verpackung 10 sowie das Auffinden des Signalfeldes 18 innerhalb der Sicherheitsmarkierung 12' zu erleichtern, weist die Sicherheitsmarkierung 12' vorzugsweise weitere Felder auf, nämlich Dunkelfelder einmal in Form von Eckmarkierungen 20 und zum anderen in Form von Orientierungsmarkierungen 22.

Die Dunkelfelder 20 und 22 haben die Eigenschaft, sowohl in dem ersten Wellenlängenbereich als auch in dem zweiten Wellenlängenbereich stark absorbierend, also schwach reflektierend zu sein und somit dunkel zu erscheinen.

Die Eckmarkierungen 20 haben die Form von rechtwinkligen, gleichschenkligen Dreiecken. Diese Form ist besonders geeignet, weil derartige Formen im übrigen Verpackungsaufdruck praktisch nicht vorkommen. Die Katheten des jeweiligen gleichschenkligen Dreieckes 20 verlaufen dabei parallel zu den Kanten der Sicherheitsmarkierung 12'. Die Hypotenusen der Eckmarkierungen 20 sind somit in Bezug auf die Sicherheitsmarkierung 12' nach innen gewandt.

Die Orientierungsmarkierungen 22 wirken zum einen als Eckmarkierungen zum Auffinden zwei weiterer Ecken der insgesamt viereckigen Sicherheitsmarkierung 12'. Außerdem schließen sie zwischen sich das Signalfeld 18 ein, so dass dieses auch dann leicht aufzufinden ist, wenn es die gleiche Farbe hat, wie der Hintergrund 14, so wie es beispielhaft in Figur 3 dargestellt ist.

Sowohl die Eckmarkierungen 20 als auch die Orientierungsmarkierungen 22 können auch andere als die im Ausführungsbeispiel dargestellten Formen haben und beispielsweise aus mehreren Teilflächen zusammengesetzt sein, so dass mit den Eckmarkierungen 20 und/oder Orientierungsmarkierungen 22 Informationen codiert werden können, ähnlich wie dies mit Hilfe des Signalfelds 18 geschieht.

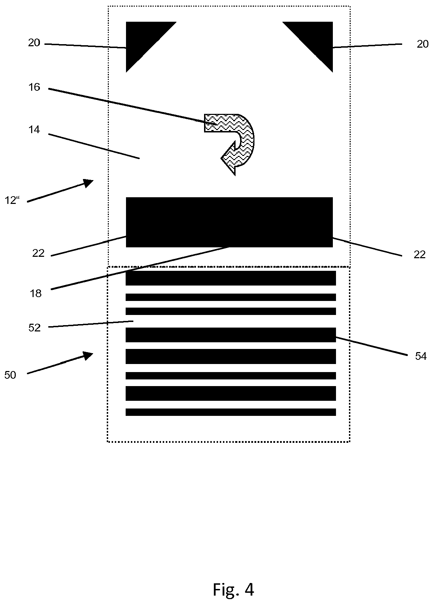

Figur 4 zeigt grundsätzlich die gleiche Sicherheitsmarkierung 12" wie Figur 3. Der einzige Unterschied zwischen der Sicherheitsmarkierung 12" aus Figur 4 gegenüber der Sicherheitsmarkierung 12' aus Figur 3 besteht darin, dass das Sicherheitsfeld 18 bei der Sicherheitsmarkierung 12" aus Figur 4 schwach reflektierend, also dunkel ist, und somit die gleiche Farbe besitzt, wie die Orientierungsmarkierungen 22 und die Eckmarkierungen 20, während das Sicherheitsfeld 18' der Sicherheitsmarkierung 12' aus Figur 3 stark reflektierend ist und somit die gleiche Farbe besitzt, wie das Kontrastfeld 14.

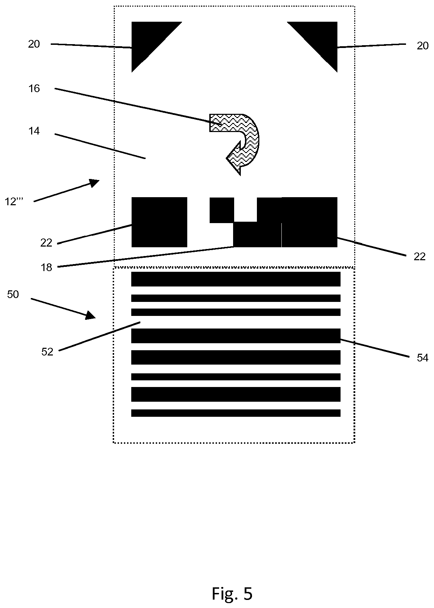

Figur 5 zeigt eine Variante einer Sicherheitsmarkierung 12‴ mit einem Signalfeld 18", das in insgesamt 8 Teilsignalfelder unterteilt ist, die entweder stark oder schwach reflektierend sind. Die acht Teilfelder können auf diese Weise einen 8 Bit (1 Byte) umfassenden Code wiedergeben. Je nach Wert des jeweiligen Bits - 0 oder 1 - ist das zugehörige Teilfeld stark oder schwach reflektierend. Im Ausführungsbeispiel gibt das Signalfeld 18" das Byte 10100110 oder 01011001 wieder, je nachdem, ob eine starke oder eine schwache Reflektivität dem Bitwert 1 zugeordnet ist. Mit einem derartigen, unterteilten Signalfeld 18" lässt sich nicht nur eine zweiwertige Information (gerichtet reflektierend oder diffus reflektierend) wiedergeben, sondern im Ausführungsbeispiel eine 256-wertige Information, als z.B. einer Vielzahl unterschiedlicher Korrekturfaktoren für beispielsweise verschiedene Verpackungen.

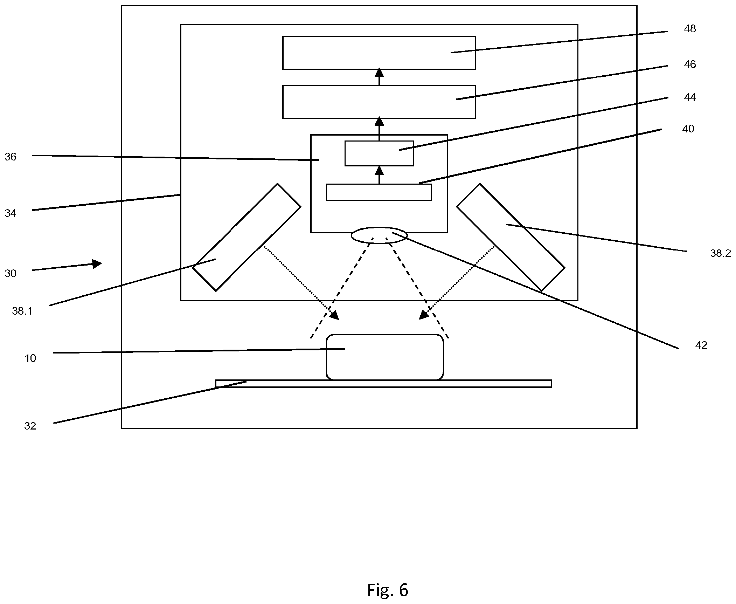

Anhand der in Figur 6 dargestellten, schematischen, skizzenhaften Darstellung einer Auslesevorrichtung 30 zum Auslesen von Sicherheitsmarkierungen 12 auf Verpackungen wie der Verpackung 10 sollen nun deren wesentliche Bestandteile sowie deren Funktionsweise beschrieben werden.

Die Auslesevorrichtung 30, die beispielsweise Teil eines Rücknahmeautomaten für Getränkeverpackungen sein kann, kann eine Transporteinrichtung 32 aufweisen, mit der eine Verpackung 10' so vor einer Ausleseeinheit 34 positioniert werden kann, dass sie sich im Sichtbereich der Bilderfassungseinheit 36 der Ausleseeinheit 34 befindet. Der Sichtbereich ist in Figur 5 durch gestrichelte schräge Linien angedeutet. Die Transporteinrichtung kann Transportbänder und/oder Walzen aufweisen. Walzen können dazu dienen, eine Getränkeverpackung so zu drehen, dass die Sicherheitsmarkierung im Erfassungsbereich der der Bilderfassungseinheit 36 befindet.

Zum Ausleuchten des Sichtbereiches ist ein Beleuchtungsmodul vorgesehen, das zwei Beleuchtungseinheiten 38.1 und 38.2 aufweist. Die Beleuchtungsrichtung und damit der Winkel, in dem die Beleuchtung auf eine auszulesende Verpackung 10 fällt, sind durch punktierte Pfeile angedeutet. Der Beleuchtungswinkel sollte zur Flächennormalen der Verpackung 10 in einem Winkelbereich zwischen 20° und 45° liegen. Die Beleuchtungseinheiten 38.1 und 38.2 des Beleuchtungsmoduls sind entsprechend angeordnet und ausgerichtet. Jedoch sind auch andere Beleuchtungswinkel und dementsprechend andere Anordnungen des Beleuchtungsmoduls möglich. Insbesondere kann das Beleuchtungsmodul auch nur eine einzige Beleuchtungseinheit aufweisen, die in der Lage ist Licht in mehreren Wellenlängenbereichen oder in einem breitbandigen Wellenlängenbereich abzugeben.

Die Beleuchtungseinheiten 38.1 und 38.2 besitzen eine Vielzahl von Leuchtdioden (LED) als Lichtquellen. Die Beleuchtungseinheit 38.1 ist zur Beleuchtung der Verpackung 10 mit Licht Intensität des reflektierten Licht in dem zweiten Wellenlängenbereich ausgebildet, während die Beleuchtungseinheit 38.2 die Verpackungseinheit 10 mit Licht Intensität des reflektierten Licht in dem ersten Wellenlängenbereich beleuchtet. Die Beleuchtungseinheit 38.2 besitzt zwei Arten von Leuchtdioden, nämlich eine erste Art von Leuchtdioden, die blaues, sichtbares Licht aussenden und eine zweite Art von Leuchtdioden, die rotes, sichtbares Licht aussenden. Das sichtbare Licht, welches die Beleuchtungseinheit 38.2 ausstrahlt, setzt sich somit aus zwei Wellenlängenbereichen zusammen mit jeweils einer zentralen Wellenlänge im blauen Bereich des sichtbaren Spektrums und einer zentralen Wellenlänge im roten Bereich des sichtbaren Spektrums. Die Halbwertbandbreite der beiden vom Beleuchtungseinheit 38.2 für sichtbares Licht ausgestrahlten Teilwellenlängenbereiche beträgt jeweils weniger als 50 nm.

Mit Hilfe des Beleuchtungsmoduls und seinen Beleuchtungseinheiten 38.1 und 38.2 lassen sich somit gezielte Beleuchtungsszenarien einstellen. Im üblichen Betrieb werden die Beleuchtungseinheiten 38.1 und 38.2 abwechselnd betrieben, so dass die Verpackung 10 entweder nur mit Licht in dem zweiten Wellenlängenbereich aus der Beleuchtungseinheit 38.1 oder mit Licht in dem ersten Wellenlängenbereich von der Beleuchtungseinheit 38.2 beleuchtet wird. Wie eingangs erläutert, ist es jedoch auch möglich, die Verpackung 10 permanent durch beide Beleuchtungseinheiten 38.1 und 38.2 zu beleuchten.

Das von der Oberfläche der Verpackung 10 reflektierte Licht wird von der Bilderfassungseinheit 36 aufgenommen. Dazu besitzt die Bilderfassungseinheit 36 einen Flächensensor 40 und eine Optik 42, die ein Abbild der Oberfläche der Verpackung 10 scharf auf einer Oberfläche des Flächensensors 40 abbildet. Die Oberfläche des Flächensensors 40 wird von einer Vielzahl lichtempfindlicher Sensorelemente gebildet. Diese sind vorzugsweise matrixartig angeordnet. Die Sensorelemente des Flächensensors 40 sowie die Optik 42 sind so ausgelegt, dass ein Quadratmillimeter der Oberfläche der Verpackung 10 auf eine Teiloberfläche des Flächensensors 40 derart abgebildet wird, dass die Teiloberfläche mindestens vier vollständige Sensorelemente enthält. Somit richtet sich der Abbildungsmaßstab, mit der die Optik 42 ein Bild der Oberfläche der Verpackung 10 auf der Oberfläche des Flächensensors 40 abbildet nach der Größe, den die Sensorelemente auf der Oberfläche des Flächensensors 40 einnehmen und dem Abstand der Sensorelemente voneinander. Es versteht sich von selbst, dass die Optik 42 so ausgebildet ist, dass sie die Oberfläche der Verpackung 10 im Bereich einer durch variierende Verpackungsdurchmesser erforderlichen Schärfentiefe scharf auf dem Flächensensor 40 abbildet.

Die Sensorelemente des Flächensensors 40 sind breitbandig lichtempfindlich, das heißt wenigstens in den Teilwellenlängenbereichen des Lichtes, die von den Beleuchtungseinheiten 38.1 und 38.2 gleichzeitig oder abwechselnd ausgestrahlt werden. Der von jedem einzelnen Sensorelement des Flächensensors 40 gelieferte Ausgangswert - hier auch als Grauwert bezeichnet - entspricht der Gesamtintensität allen Lichtes in den verschiedenen Wellenlängenbereichen, die von dem jeweiligen Sensorelement erfasst wird.

Der von einem jeweiligen Sensorelement des Flächensensors 40 gelieferte Ausgangswert, der hier auch als Grauwert bezeichnet wird, ist umso größer, je größer die gesamte Intensität des Lichts ist, die auf das jeweilige Sensorelement trifft. Die gesamte Intensität des Lichts ist, die auf das jeweilige Sensorelement trifft setzt sich dabei aus den Teilintensitäten des Lichts in den verschiedenen Wellenlängenbereichen zusammen, aus denen sich das auf ein jeweiliges Sensorelement auftreffende Licht zusammensetzt.

Diese gesamte Intensität ist die Intensität des vom Sensorelement erfassten Lichtes in dem zweiten Wellenlängenbereich, wenn die Verpackung ausschließlich von der Beleuchtungseinheit 38.1 mit Licht in dem zweiten Wellenlängenbereich beleuchtet wird. Genauso entspricht der Ausgangswert eines jeweiligen Sensorelementes der jeweiligen Intensität in dem ersten Wellenlängenbereich des Lichtes, wenn die Verpackungsoberfläche ausschließlich von der Beleuchtungseinheit 38.2 mit Licht in dem ersten Wellenlängenbereich beleuchtet wird.

Wenn die Oberfläche der Verpackung 10 hingegen sowohl von der Beleuchtungseinheit 38.1 als auch von der Beleuchtungseinheit 38.2 gleichzeitig mit Licht in dem zweiten Wellenlängenbereich wie mit Licht in dem ersten Wellenlängenbereich beleuchtet wird, hängt die von einem jeweiligen Sensorelement erfasste Lichtintensität - und damit der ausgegebene Grauwert - von der Summe der Intensität ab, mit der ein jeweiliges, dem Sensorelement über die Abbildung zugeordnetes Oberflächenelement Licht in dem ersten Wellenlängenbereich und in dem zweiten Wellenlängenbereich reflektiert.

Dies bedeutet, dass Sensorelemente, die beispielsweise einen Teil des Kontrastfeldes 14 der Sicherheitsmarkierung 12 erfassen, immer einen großen Helligkeitswert erfassen und somit einen großen Ausgangswert - und damit hohen Grauwert wᵢ - liefern. Hingegen werden Sensorelemente, die einen Teil einer Orientierungsmarkierung 22 oder einer Eckmarkierung 20 erfassen, immer einen geringen Helligkeitswert erfassen und somit auch einen geringen Ausgangswert und Grauwert sᵢ liefern, ganz unabhängig davon, ob die Beleuchtung mit Licht in dem ersten Wellenlängenbereich oder mit Licht in dem zweiten Wellenlängenbereich erfolgt. Der Grauwert dᵢ, den ein Sensorelement liefert, auf den ein Teil des Sicherheitsfeldes 16 abgebildet wird, hängt hingegen von der Art der Beleuchtung ab.

Bei Beleuchtung der Verpackung mit Licht in dem ersten Wellenlängenbereich, ist die vom Sicherheitsfeld 16 reflektierte Intensität gering, so dass ein einen Teil des Sicherheitsfeldes 16 erfassendes Sensorelement nur einen niedrigen Grauwert d₁ liefert. Erfolgt die Beleuchtung der Verpackung jedoch mit Licht in dem zweiten Wellenlängenbereich, ist die vom Sicherheitsfeld reflektierte Intensität des Lichtes - je nach Untergrund - deutlich höher und kann beispielsweise der dem Kontrastfeld 14 reflektierten Intensität entsprechen. Entsprechend liefert ein Sensorelement, auf dem ein Teil des Sicherheitsfeldes abgebildet wird, bei Beleuchtung der Verpackung 10 mit Licht in dem zweiten Wellenlängenbereich einen hohen Grauwert d₂. Wird die Verpackung 10 hingegen gleichzeitig mit Licht in dem ersten Wellenlängenbereich und in dem zweiten Wellenlängenbereich beleuchtet, ist der von einem das Sicherheitsfeld erfassenden Sensorelement gelieferte Grauwert ein mittlerer Grauwert.

Innerhalb des Bilderfassungseinheit 36 erfolgt eine Vorverarbeitung der vom Flächensensor 40 gelieferten Grauwerten in einer Vorverarbeitungseinheit 44. Die aufbereiteten Grauwerte (Ausgangswerte der Sensorelemente des Flächensensors 40) werden einer Auswerteeinheit 46 zugeführt, in der zum einen eine Erfassung der verschiedenen Bereiche der Sicherheitsmarkierung mit Hilfe an sich bekannter Mustererkennungsverfahren erfolgt.

Diese Bilderfassung des Abbildes der Sicherheitsmarkierung dient auch dazu, den Ort des Signalfeldes 18 zu bestimmen, um dessen Intensität auslesen zu können. Je nachdem welche Intensität das vom Signalfeld 18 reflektierte Licht hat, schaltet die Auswerteeinheit 46 eine andere Referenzschwelle für die Bewertung der vom Sicherheitsfeld 16 reflektierten Intensität des Lichtes in dem zweiten Wellenlängenbereich ein.

Zum anderen werden die von den verschiedenen Feldern der Sicherheitsmarkierung gelieferten Intensitätswerte zur Bewertung der jeweiligen Sicherheitsmarkierung mit jeweiligen Referenzschwellen verglichen. Diese Bewertung erfolgt durch eine Bewertungseinheit, die Teil der Auswerteeinheit 46 ist und daher in Fig. 5 nicht näher dargestellt. Von besonderer Bedeutung für die Bewertung ist dabei die Referenzschwelle für die Intensitätswerte, die bei Beleuchtung der Sicherheitsmarkierung mit Licht in dem zweiten Wellenlängenbereich im Bereich des Sicherheitsfeldes 16 erfasst wurden.

Die Bewertung der durch entsprechende Grauwerte d₂ repräsentierten Intensitätswerte, die dem Sicherheitsfeld 16 bei Beleuchtung mit Licht in dem zweiten Wellenlängenbereich zuzuordnen sind, erfolgt dabei mit Bezug auf die Grauwerte d₁ - und damit die Intensitätswerte -, die dem Sicherheitsfeld 16 bei Beleuchtung mit Licht in dem ersten Wellenlängenbereich zuzuordnen sind. Je nachdem davon, wie stark die Intensität des reflektierten Licht in dem zweiten Wellenlängenbereich von der Intensität des reflektierten Licht in dem ersten Wellenlängenbereich abweicht, wird eine Verpackung akzeptiert und die Auszahlung des Pfandes veranlasst oder nicht.

Die Prüfung durch die Auswerteeinheit 46 erfolgt dabei gemäß folgendem Verfahren:
Zur Prüfung der Sicherheitsmarkierung werden die Intensitäten des vom Sicherheitsfeld 16 in zwei unterschiedlichen Wellenlängenbereichen reflektierten Lichts in Form von Grauwerten d₁, d₂ erfasst. Außerdem werden die Intensitäten des von dem Kontrastfeld 14 in dem ersten Wellenlängenbereich reflektierten Lichts in Form eines ggf. gemittelten Grauwerts w₁ erfasst.

Vorzugsweise werden die Grauwerte so skaliert - und somit normiert - dass die Differenz zwischen dem gemittelten numerischen Grauwert des Kontrastfelds und dem gemittelten numerischen Grauwert eines oder mehrerer Dunkelfelder eines Abbildes (einer Aufnahme) der Sicherheitsmarkierung 12 zu 100% gesetzt wird (Kontrastnormierung). Dies ermöglicht die Vergleichbarkeit von Grauwerten aus verschiedenen Abbildern der Sicherheitsmarkierung 12.

Zur Prüfung der Integrität der Kombination aus Sicherheitsmarkierung 12 und Identifikationskennzeichnung 50 wird diese Kombination in dem einen oder dem andren Wellenlängenbereich beleuchtet und neben dem Grauwert des Kontrastfeldes 14 w₁ oder w₂ auch der Grauwert des Hintergrundes 52 der Identifikationskennzeichnung 50 b₁ oder b₂ bestimmt. Wenn der Grauwert des Kontrastfeldes 14 w₁ oder w₂ von dem Grauwert des Hintergrundes 52 der Identifikationskennzeichnung 50 b₁ oder b₂ um mehr als 10% abweicht, Kombination aus Sicherheitsmarkierung 12 und Identifikationskennzeichnung 50 als unzulässig abgewiesen. Hierzu wird ein eine mangelnde Integrität der Kombination aus Sicherheitsmarkierung und Identifikationskennzeichnung kennzeichnendes Signal generiert und ausgegeben eines, falls der Grauwert des Kontrastfeldes der Sicherheitsmarkierung um mehr als ein vorgegebenes Höchstmaß - nämlich z.B. um mehr als 5% oder 10% - von dem Grauwert des Hintergrunds der Identifikationskennzeichnung abweicht.

Da die Helligkeit des Kontrastfeldes 14 und/oder des Hintergrunds 52 beispielsweise infolge ungleichmäßiger Beleuchtung oder aufgrund einer nicht ebenen Oberfläche ungleichmäßig sein kann, kommt es regelmäßig vor, dass die Sensorelemente des Flächensensors 40, auf die entsprechenden Teilflächen des Kontrastfeldes 14 und des Hintergrundes 52 abgebildet werden, nicht sämtlich den selben Grauwert liefern. Daher wird vorzugsweise ein Grauwerthistogramm gebildet und diese geglättet.

Auch ist es vorteilhaft, mehrere Messfenster zum Bestimmen des Grauwerts des Kontrastfeldes 14 bzw. des Hintergrundes 52 vorzusehen. Z.B. kann jedes helle Feld zwischen den Balken des Barcodes 50 ein eigenes Messfeld sein.

Vorzugsweise erfolgt dies für Grauwerte des Kontrastfeldes 14 und die Grauwerte des Hintergrunds 52 jeweils separat wie folgt:
- Histogramm berechnen.
- Histogramm fünfmal glätten (Kernel: [1,1,1,1,1]).
- Histogrammmaximum (HistMax) bestimmen (höchster Peak mit dem niedrigsten Grauwert).
- Alle Histogrammwerte entfernen, die kleiner sind als ClipFactor (0,5) * HistMax.
- Mittelwert aus dem modifizierten Histogramm berechnen.
- Grauwert des Kontrastfeldes beziehungsweise des Hintergrundes am Ende als Mittelwert der individuellen Grauwerte in den Messfenstern berechnen;

Anstelle oder zusätzlich zu der Integritätsprüfung auf Basis der Helligkeitswerte von Kontrastfeld und Hintergrund kann auch eine Geometrieprüfung vorgesehen sein, bei der z.B. die Parallelität von Zeichenbestandteilen der Sicherheitsmarkierung 12 und der Identifikationskennzeichnung überprüft wird.

Die Auswerteeinheit 46 ist außerdem mit einer Steuereinheit 48 verbunden, die beispielsweise der Ansteuerung der Beleuchtungseinheiten 38.1 und 38.2 dient und die außerdem die Transportvorrichtung 32 steuert, um beispielsweise die Verpackung 10 mittels der Transporteinrichtung 32 so zu drehen, dass sich die Sicherheitsmarkierung auf der Oberfläche der Verpackung 10 im Sichtbereich der Ausleseeinheit 36 befindet. Auch hierzu dient die Bilderkennung durch die Auswerteeinheit 46.

Die Steuereinheit steuert außerdem die Pfanderstattung so wie die Rücknahmen von Verpackungen.

## Patentansprüche

1. Prüfverfahren zum Überprüfen der Integrität einer Kombination aus einer Sicherheitsmarkierung und einer Identifikationskennzeichnung, von denen die Sicherheitsmarkierung wenigstens ein Kontrastfeld mit einer vergleichsweise hohen Reflektivität in einem ersten und einem zweiten Wellenlängenbereich und ein Sicherheitsfeld, das in dem ersten Wellenlängenbereich andere Reflexionseigenschaften aufweist, als in dem zweiten Wellenlängenbereich aufweist, und von denen die Identifikationskennzeichnung wenigsten einen hellen Hintergrund und mit dunkler Farbe gedruckte Zeichenbestanteile aufweist, wobei das Prüfverfahren die folgenden Schritte umfasst:
- Beleuchten der Kombination aus Sicherheitsmarkierung und Identifikationskennzeichnung mit Licht in einem vorgegebenen Wellenlängenbereich,
- Aufnahmen eines Abbildes der Kombination aus Sicherheitsmarkierung und Identifikationskennzeichnung,
- Identifizieren der Sicherheitsmarkierung und der Identifikationskennzeichnung in dem Abbild,
- Erfassen eines gegebenenfalls gemittelten Grauwerts des Kontrastfeldes der Sicherheitsmarkierung,
- Erfassen eines gegebenenfalls gemittelten Grauwerts des Hintergrunds der Identifikationskennzeichnung,
- Vergleichen des Grauwerts des Kontrastfeldes der Sicherheitsmarkierung mit dem Grauwert des Hintergrunds der Identifikationskennzeichnung,
- Bestimmen, ob der Grauwert des Kontrastfeldes der Sicherheitsmarkierung um weniger als ein vorgegebenes Höchstmaß von dem Grauwert des Hintergrunds der Identifikationskennzeichnung abweicht, und
- Generieren und Ausgeben eines eine mangelnde Integrität kennzeichnenden Signals, falls der Grauwert des Kontrastfeldes der Sicherheitsmarkierung um mehr als ein vorgegebenes Höchstmaß von dem Grauwert des Hintergrunds der Identifikationskennzeichnung abweicht.

2. Prüfverfahren nach Anspruch 1, **dadurch gekennzeichnet, dass** Grauwerte des Kontrastfeldes der Sicherheitsmarkierung und Grauwerte des Hintergrunds der Identifikationskennzeichnung jeweils in verschiedenen Messfeldern bestimmt und gemittelt werden.

3. Prüfverfahren nach Anspruch 2, **dadurch gekennzeichnet, dass** für jedes der Messfelder ein Grauwerthistogramm gebildet wird.

4. Prüfverfahren nach Anspruch 3, **dadurch gekennzeichnet, dass** die Grauwerthistogramme geglättet werden.

5. Prüfverfahren nach wenigstens einem der Ansprüche 1 bis 4, **dadurch gekennzeichnet, dass** eine geprüfte Kombination aus Sicherheitsmarkierung und Identifikationskennzeichnung als unzulässig abgewiesen wird, wenn der Grauwert des Kontrastfeldes der Sicherheitsmarkierung um mehr als 10% von dem Grauwert des Hintergrunds der Identifikationskennzeichnung abweicht.

6. Ausleseeinheit (34) für eine Kombination aus einer Sicherheitsmarkierung (12) und einer Identifikationskennzeichnung (50), von denen die Sicherheitsmarkierung wenigstens ein Kontrastfeld mit einer vergleichsweise hohen Reflektivität in einem ersten und einem zweiten Wellenlängenbereich und ein Sicherheitsfeld, das in dem ersten Wellenlängenbereich andere Reflexionseigenschaften aufweist, als in dem zweiten Wellenlängenbereich, und von den die Identifikationskennzeichnung wenigsten einen hellen Hintergrund und mit dunkler Farbe gedruckte Zeichenbestanteile aufweist, **dadurch gekennzeichnet, dass** die Ausleseeinheit (34) ausgebildet ist,
- einen gegebenenfalls gemittelten Grauwert des Kontrastfeldes der Sicherheitsmarkierung zu erfassen,
- einen gegebenenfalls gemittelten Grauwert des Hintergrunds der Identifikationskennzeichnung zu erfassen,
- den Grauwert des Kontrastfeldes der Sicherheitsmarkierung mit dem Grauwert des Hintergrunds der Identifikationskennzeichnung zu vergleichen, und
- zu bestimmen, ob der Grauwert des Kontrastfeldes der Sicherheitsmarkierung um weniger als ein vorgegebenes Höchstmaß von dem Grauwert des Hintergrunds der Identifikationskennzeichnung abweicht.

7. Ausleseeinheit nach Anspruch 6, **dadurch gekennzeichnet, dass** die Ausleseeinheit eine Bilderfassungseinheit (36) mit einem Flächensensor (40) mit vorzugsweise matrixartig angeordneten, lichtempfindlichen Sensorelementen zum Erfassen eines auf den Sensor abgebildeten Bildes in zwei Dimensionen aufweist, die sowohl in dem ersten Wellenlängenbereich des Lichtes als auch in dem zweiten Wellenlängenbereich lichtempfindlich sind.

8. Ausleseeinheit nach Anspruch 7, **dadurch gekennzeichnet, dass** die Ausleseeinheit (34) ein Beleuchtungsmodul (38.1, 38.2) aufweist, dass ausgebildet und angeordnet ist, einen Sichtbereich der Bilderfassungseinheit (36) gleichzeitig oder abwechselnd mit Licht in dem ersten Wellenlängenbereich und in dem zweiten Wellenlängenbereich zu beleuchten.

9. Ausleseeinheit nach Anspruch 8, **dadurch gekennzeichnet, dass** das Beleuchtungsmodul (38.1, 38.2) im Betrieb der Ausleseeinheit (34) Licht im sichtbaren Wellenlängenbereich mit zwei Hauptwellenlängen ausstrahlt, von denen eine rotem Licht entspricht und die andere Hauptwellenlänge blauem Licht entspricht.

10. Ausleseeinheit nach Anspruch 8 oder 9, **dadurch gekennzeichnet, dass** das Beleuchtungsmodul (38.1, 38.2) Leuchtdioden als Lichtquellen aufweist.

11. Ausleseeinheit nach Anspruch 10, **dadurch gekennzeichnet, dass** das Beleuchtungsmodul (38.1, 38.2) unterschiedliche Leuchtdioden aufweist, von denen eine erste Anzahl von Leuchtdioden im Betrieb der Ausleseeinheit Licht in einem zweiten Wellenlängenbereich emittiert, dessen Wellenlänge derart auf die Farbe des Sicherheitsfeldes (16) abgestimmt ist, dass die emittierte Wellenlänge maximal 100 nm über einer Wellenlänge liegt, bei der die Absorption der Farbe weniger als 40% der Absorption der Farbe in dem ersten Wellenlängenbereich beträgt.

## Claims

1. Inspection method for checking the integrity of a combination of a security marking and an identification label, said security marking comprising at least one contrast field with a comparatively high reflectivity in a first and a second wavelength range and a security field having different reflection properties in the first wavelength range compared to the second wavelength range, and said identification marking having at least one light background and mark components printed with dark color, the inspection method comprising the following steps:
- illuminating the combination of security marking and identification marking with light in a specified wavelength range,
- capturing an image of the combination of security marking and identification marking,
- identifying the security marking and the identification marking in the image,
- capturing a possibly averaged gray value of the contrast field of the security marking,
- capturing a possibly averaged gray value of the background of the identification marking,
- comparing the gray value of the contrast field of the security marking with the gray value of the background of the identification marking,
- determining whetherthe gray value of the contrast field of the security marking deviates from the gray value of the background of the identification marking by less than a predefined maximum amount, and
- generating and outputting a signal indicating a lack of integrity if the gray value of the contrast field of the security marking deviates from the gray value of the background of the identification marking by more than a predefined maximum.

2. Inspection method according to claim 1, **characterized in that** gray values of the contrast field of the security marking and gray values of the background of the identification marking are each determined and averaged in different measurement fields.

3. Inspection method according to claim 2, **characterized in that** a gray value histogram is formed for each of the measurement fields.

4. Inspection method according to claim 3, **characterized in that** the gray value histograms are smoothed.

5. Inspection method according to at least one of claims 1 to 4, **characterized in that** an inspected combination of security marking and identification marking is rejected as inadmissible if the gray value of the contrast field of the security marking deviates from the gray value of the background of the identification marking by more than 10%.

6. Readout unit (34) for a combination of a security marking (12) and an identification marking (50), of which the security marking comprises at least one contrast field with a comparatively high reflectivity in a first and a second wavelength range and a security field having different reflection properties in the first wavelength range compared to the second wavelength range, and of which the identification marking comprises at least one light background and mark components printed with dark color, **characterized in that** the readout unit (34) is designed to:
- capture a possibly averaged gray value of the contrast field of the security marking,
- capture a possibly averaged gray value of the background of the identification marking,
- compare the gray value of the contrast field of the security marking with the gray value of the background of the identification label, and
- determine whether the gray value of the contrast field of the security marking deviates from the gray value of the background of the identification label by less than a predefined maximum amount.

7. Readout unit according to claim 6, **characterized in that** the readout unit comprises an image acquisition unit (36) with an area sensor (40) having light-sensitive sensor elements, preferably arranged in a matrix-like manner, for capturing an image imaged on the sensor in two dimensions, being sensitive to light both in the first wavelength range of the light and in the second wavelength range.

8. Readout unit according to claim 7, **characterized in that** the readout unit (34) comprises an illumination module (38.1, 38.2) which is designed and arranged to illuminate a field of view of the image acquisition unit (36) simultaneously or alternately with light in the first wavelength range and in the second wavelength range.

9. Readout unit according to claim 8, **characterized in that** the illumination module (38.1, 38.2) emits light in the visible wavelength range with two main wavelengths when the readout unit (34) is in operation, one of which corresponds to red light and the other main wavelength corresponds to blue light.

10. Readout unit according to claim 8 or 9, **characterized in that** the illumination module (38.1, 38.2) comprises light-emitting diodes as light sources.

11. Readout unit according to claim 10, **characterized in that** the illumination module (38.1, 38.2) comprises different light-emitting diodes, of which a first number of light-emitting diodes emits light in a second wavelength range when the readout unit is in operation, the wavelength of which is matched to the color of the security field (16) in such a way that the emitted wavelength is a maximum of 100 nm above a wavelength at which the absorption of the color is less than 40% of the absorption of the color in the first wavelength range.

## Revendications

1. Procédé de test visant à vérifier l'intégrité d'une combinaison de marquage de sécurité et de marquage d'identification, dont le marquage de sécurité comprend au moins un champ de contraste présentant une réflectivité relativement élevée dans une première et une deuxième plage de longueurs d'onde et un champ de sécurité présentant des propriétés de réflexion différentes dans la première et la deuxième plage de longueurs d'onde, et dont le marquage d'identification comprend au moins un arrière-plan clair et des parties de caractères imprimées en couleur sombre. Ce procédé de test comprend les étapes suivantes :
- illuminer la combinaison du marquage de sécurité et du marquage d'identification au moyen de lumière émise dans une plage de longueurs d'onde prédéterminée,
- capturer des images de la combinaison du marquage de sécurité et du marquage d'identification,
- identifier le marquage de sécurité et le marquage d'identification dans l'image,
- saisir, le cas échéant, une valeur de gris moyenne du champ de contraste du marquage de sécurité,
- saisir, le cas échéant, une valeur de gris moyenne de l'arrière-plan du marquage d'identification,
- comparer la valeur de gris du champ de contraste du marquage de sécurité avec celle de l'arrière-plan du marquage d'identification,
- déterminer si la valeurde gris du champ de contraste du marquage de sécurité diffère de celle de l'arrière-plan du marquage d'identification de moins d'une valeur maximale prédéterminée, et
- générer et émettre un signal indiquant un manque d'intégrité si la valeur de gris du champ de contraste du marquage de sécurité diffère de celle de l'arrière-plan du marquage d'identification de plus d'une valeur maximale prédéterminée.

2. Procédé de test selon la revendication 1, **caractérisé en ce que** les valeurs de gris du champ de contraste du marquage de sécurité et celles de l'arrière-plan du marquage d'identification sont déterminées et calculées en moyenne dans différents champs de mesure.

3. Procédé de test selon la revendication 2, **caractérisé en ce qu'**un histogramme des valeurs de gris est formé pour chacun des champs de mesure.

4. Procédé de test selon la revendication 3, **caractérisé en ce que** les histogrammes des valeurs de gris sont lissés.

5. Procédé de test selon au moins l'une des revendications 1 à 4, **caractérisé en ce qu'**une combinaison testée de marquage de sécurité et de marquage d'identification est rejetée comme étant inadmissible si la valeur de gris du champ de contraste du marquage de sécurité diffère de plus de 10 % de la valeur de gris de l'arrière-plan du marquage d'identification.

6. Unité de lecture (34) pour une combinaison de marquage de sécurité (12) et de marquage d'identification (50), dont le marquage de sécurité comprend au moins un champ de contraste présentant une réflectivité relativement élevée dans la première et la deuxième plage de longueurs d'onde et un champ de sécurité qui présente des propriétés de réflexion différentes dans la première et la deuxième plage de longueurs d'onde, et dont le marquage d'identification comprend au moins un arrière-plan clair et des parties de caractères imprimées en couleur sombre, **caractérisé en ce que** l'unité de lecture (34) est conçue pour :
- détecter une valeur de gris, éventuellement calculée en moyenne, du champ de contraste du marquage de sécurité,
- détecter une valeur de gris, éventuellement calculée en moyenne, de l'arrière-plan du marquage d'identification,
- comparer la valeur de gris du champ de contraste du marquage de sécurité avec celle de l'arrière-plan du marquage d'identification, et
- déterminer si la valeurde gris du champ de contraste du marquage de sécurité diffère de celle de l'arrière-plan du marquage d'identification de moins d'une valeur maximale prédéterminée.

7. Unité de lecture selon la revendication 6, **caractérisée en ce que** l'unité de lecture présente une unité de capture d'image (36) comprenant un capteur de surface (40) équipé d'éléments de détection sensibles à la lumière, disposés de préférence sous forme de matrice, pour saisir une image reproduite sur le capteur en deux dimensions, ces éléments étant sensibles à la lumière aussi bien dans la première que dans la deuxième plage de longueurs d'onde.

8. Unité de lecture selon la revendication 7, **caractérisée en ce que** l'unité de lecture (34) comprend un module d'éclairage (38.1, 38.2) qui est conçu et agencé pour éclairer une zone de visualisation de l'unité de capture d'image (36) de manière simultanée ou alternée avec de la lumière émise dans la première et la deuxième plage de longueurs d'onde.

9. Unité de lecture selon la revendication 8, **caractérisée en ce que** le module d'éclairage (38.1, 38.2) émet, en fonctionnement de l'unité de lecture (34), de la lumière dans la plage de longueurs d'onde visible comprenant deux longueurs d'onde principales, dont l'une correspond à la lumière rouge et l'autre à la lumière bleue.

10. Unité de lecture selon la revendication 8 ou 9, **caractérisée en ce que** le module d'éclairage (38.1, 38.2) présente des diodes électroluminescentes comme sources lumineuses.

11. Unité de lecture selon la revendication 10, **caractérisée en ce que** le module d'éclairage (38.1, 38.2) comporte différentes diodes électroluminescentes, dont un premier nombre de diodes électroluminescentes émet, en fonctionnement de l'unité de lecture, de la lumière dans une deuxième plage de longueurs d'onde, dont la longueur d'onde est adaptée à la couleur du champ de sécurité (16) de manière à ce que la longueur d'onde émise soit supérieure de 100 nm au maximum à la longueur d'onde pour laquelle l'absorption de la couleur est inférieure à 40 % de l'absorption de la couleur dans la première plage de longueurs d'onde.
